# EUROPÄISCHE PATENTSCHRIFT

(11) **EP 3 427 325 B1**
(45) Veröffentlichungstag und Bekanntmachung des Hinweises auf die Patenterteilung: **07.04.2021**
(21) Anmeldenummer: 17708279.9
(22) Anmeldetag: 06.03.2017
(51) Int. Cl.: H01M 10/42, H01M 10/44, H01M 10/48, H01M 16/00, H01M 10/6572, H01M 10/46, H02J 7/00, H02J 7/34

(54) **SPEICHERSYSTEM ZUR SPEICHERUNG ELEKTRISCHER ENERGIE**
SYSTEM FOR STORING ELECTRICAL ENERGY
SYSTEME DE STOCKAGE D'ENERGIE ELECTRIQUE

(30) Priorität: 08.03.2016 EP 16401017; 09.09.2016 DE 202016105015 U
(43) Veröffentlichungstag der Anmeldung: 16.01.2019
(73) Patentinhaber: BOS Balance of Storage Systems AG, 89171 Illerkirchberg (DE)
(72) Erfinder: KÜNDIGER, Thomas, 89171 Illerkirchberg (DE); SECKINGER, Benjamin, 89171 Illerkirchberg (DE); ADELMANN, Peter, 89171 Illerkirchberg (DE)
(74) Vertreter: K&P Patentanwaltsgesellschaft mbH
(86) Internationale Anmeldenummer: PCT/EP2017/055155
(87) Internationale Veröffentlichungsnummer: WO 2017/153317

(56) Entgegenhaltungen:
- DE-A1-102010 061 025
- DE-A1-102012 013 413
- US-A1- 2014 184 153
- US-A1- 2015 035 356
- US-A1- 2015 270 731
- US-A1- 2015 340 746

## Beschreibung

Die Erfindung betrifft ein Speichersystem zur Speicherung elektrischer Energie gemäß dem Oberbegriff des Patentanspruchs 1.

Wenn in dieser Anmeldung von Energiespeicher gesprochen wird, sind damit alle Formen elektrochemischer Speicher bzw. Akkumulatoren gemeint. Der Begriff Batterie beschreibt den Zusammenschluss vorrangig mehrerer Akkumulatorzellen in Reihen- oder Parallelschaltung. Umgekehrt sind auch bei einer Verwendung der Begriffe "Akkumulator" oder "Batterie" alle Formen von wiederholt aufladbaren elektrischen bzw. elektrochemischen Energiespeichern umfasst.

Der Begriff Schaltung beschreibt eine elektrische oder elektronische Schaltung, also den Zusammenschluss von elektrischen, elektronischen und elektromechanischen Einzelelementen und wird für die erfindungsgemäße Anordnung der entsprechenden Elemente verwendet. Das erfindungsgemäße Batteriesystem bzw. Hybridsystem besteht damit wenigstens aus dem ersten und zweiten Energiespeicher und einer Schaltung.

Der Begriff Laderegler beschreibt eine elektrische oder elektronische Schaltung, die die bereitgestellte Energie in eine für den entsprechenden Akkumulator geeignete Form wandelt, elektrische Lasten regelt oder schaltet und Schutzschaltungen wie Über- und Unterspannungsschutz des Akkumulators beinhaltet.

Der Balancer bzw. die Balancerschaltung ist eine elektronische Schaltung, die die Spannung der einzelnen Akkumulatorzellen überwacht und bei ungleichen Spannungen der einzelnen Zellen entsprechende Maßnahmen zum Ausgleich der Zellspannungen einleitet, beispielsweise das Zuschalten eines Widerstandes an eine Akkumulatorzelle mit höherer Spannung.

Hybridsysteme, die versuchen, die Vorteile von Bleiakkumulatoren mit anderen Energiespeichern zu kombinieren sind bereits in mehreren Varianten bekannt. Dabei sind Bleiakkumulatoren als preisgünstiger, bewährter Energiespeicher bekannt, zu dem es viele passende Geräte gibt. Als Nennspannungen sind bei diesen vor allem 6V, 12V und Vielfache davon, insbesondere 24V oder 48V, üblich. Die Lebensdauer von Bleiakkumulatoren ist jedoch von vielen Faktoren wie Temperatur, Entladetiefe usw. abhängig. Die Lebensdauer von Bleiakkumulatoren wird zudem durch Sulphatierung extrem verringert, wenn der Akkumulator nicht in regelmäßigen Abständen auf 100% Ladezustand (auch "State of Charge" oder "SOC" genannt) aufgeladen wird. Derartige Bleiakkumulatoren wurden bereits mit einem zweiten Energiespeicher mit anderen Eigenschaften kombiniert, um ein vorteilhaftes Gesamtsystem zu bekommen. Als Energiespeicher kommen häufig Batterien bestehend aus mehreren parallel oder in Reihe geschalteten Akkumulator-Zellen zum Einsatz. Wenn bei der Reihenschaltung keine Überwachung der Einzelzellspannung stattfindet, steigt mit zunehmender Zellenzahl das Risiko, dass einzelne Zellen unzulässige Werte an Spannung oder Ladezustand annehmen was zu starker Verkürzung der Lebensdauer führt.

Ein System mit zwei verschiedenen parallelgeschalteten Batterien ist zunächst überbestimmt, da jede der Batterien aufgrund ihrer Eigenschaften entsprechend einer Spannungsquelle eine individuelle Ausgangsspannung hat, was Umladeströme von einer Batterie zur anderen zur Folge hat, um die Spannungen anzugleichen. Ein alternatives Hin- und Herschalten der Last zwischen den Batterien bedeutet, dass kein paralleler (unterstützender) Betrieb möglich ist, also ebenfalls jede Batterie mit maximal hohen Strömen belastet wird. Alternativ werden bislang DC/DC Wandler eingesetzt, um unterschiedliche Spannungen der Batterien auszugleichen, dann müssen die Spannungen der beiden Energiespeicher nicht gleich sein (siehe US 2015/0270731 A1). Derartige Systeme sind zwar universell einsetzbar, die DC/DC Wandler stellen aber einen technischen Zusatzaufwand dar. Wird die gesamte Energie in einem DC/DC-Wandler gewandelt, entstehen zusätzliche Verluste, da deren maximaler Wirkungsgrad limitiert ist.

Aus der US 2015/0035356 A1 ist ein gattungsgemäßes Speichersystem bekannt, bei dem ein erster Energiespeicher und ein zweiter Energiespeicher mittels einer Schaltung zur Ankopplung an ein Bordnetz eines Fahrzeugs zusammengeschaltet sind und der zweite Energiespeicher zum Schutz abgekoppelt oder über einen Widerstand parallelgeschaltet werden kann Ein weiteres Speichersystem ist aus der US2014184153 A1 bekannt.

Aufgabe der Erfindung ist es, ein vorteilhaftes vereinfachtes Speichersystem bzw. eine Lade-/Entladeregelung zu schaffen, bei dem eine erste Batterie und wenigstens eine zweite Batterie, die eine unterschiedliche Zyklenfestigkeit und/oder Lade- und Entladecharakteristik aufweisen, zur optimalen Nutzung der Vorteile beider Batterien zusammengeschaltet sind.

Diese Aufgabe wird durch ein Speichersystem mit den Merkmalen des Anspruchs 1 gelöst. Vorteilhafte Ausgestaltungen der Erfindung sind in den Unteransprüchen angegeben.

Für eine lange Lebensdauer wird die als erste Batterie oder Gruppe gleichartiger erster Batterien vorgesehene Bleibatterie vorrangig möglichst häufig auf 100% vollgeladen, wodurch bei Bleibatterien einer Sulphatierung wirksam entgegengewirkt wird, wodurch es möglich wird, eine höhere Batterielebensdauer auch bei zeitlich begrenzten Ladeperioden zu erreichen. Die Vermeidung vorzeitiger Batterieausfälle schont die natürlichen Ressourcen durch geringeren Verbrauch an Blei und einen viel seltener erforderlichen Recyclingprozess. Besonders vorteilhaft ist für eine Bleibatterie ein Vollladen bei konstanter Spannung und geringem Strom, während bei vielen Anwendungen (PV-Generator, Lichtmaschine, Dieselgenerator) ein höherer Strom zur Verfügung steht, der beim Laden mit konstanter Spannung nicht vollständig genutzt werden kann. Das erfindungsgemäße Hybridspeichersystem erlaubt es, die Überschüsse, die die Bleibatterie nicht aufnehmen kann, in die vorzugsweise als Lithiumbatterie mit geringerer Ladekapazität ausgebildete zweite Batterie zu laden und diese auch bevorzugt wieder zu entladen.

Dies wird erfindungsgemäß in überraschend einfacher Weise dadurch erreicht, dass der zweite Energiespeicher gegenüber dem ersten Energiespeicher eine geringfügig höhere, im Bereich der Ladespannung des ersten Energiespeichers (11) liegende Nennspannung aufweist, was die vorrangige Entladung dieses Energiespeichers ermöglicht und dass zusätzlich ein Spannungsgefälle zwischen dem ersten Energiespeicher und dem zweiten Energiespeicher mittels einer Schaltung oder einer Strombegrenzung, mittels mehrerer Halbleiter aufrechterhalten wird, die als antiseriell verschaltete Transistoren ausgebildet sind, die schaltend, analog oder getaktet betrieben werden, und so eine vorrangige Ladung des ersten Energiespeichers und eine Strombegrenzung am zweiten Energiespeicher sicherstellen.

Bei einem besonders vorteilhaften System entspricht die Arbeitsspannung des zweiten Energiespeichers der Ladespannung des ersten Energiespeichers.

Gemäß einer vorteilhaften Weiterbildung ist vorgesehen, dass mehrere derartige Speichersysteme zu einem Gesamtsystem in Reihe geschaltet werden, wobei jedes dieser Speichersysteme oder eine übergeordnete Steuerung die Spannung der jeweiligen ersten Batterie und die Spannung des Gesamtsystems erfasst, verarbeitet und entsprechend regelt und zusätzlich mit einem kleiner dimensionierten DC/DC Wandler Ausgleichsströme zwischen den Energiespeichern und dem Gesamtsystems ermöglicht, mit denen Ausgleichsströme ins System eingespeist oder vom System einer schwächeren Batterie zugeführt werden. Das Zusammenschalten mehrerer Systeme ermöglicht einen modularen Aufbau zu einem Gesamtsystem, bei dem einzelne System-Module beispielsweise eine Nennspannung von 12V aufweisen und in einfacher Weise zu einem 24V- , 36V- oder 48V-Gesamtsystem zusammengeschaltet werden können. Die Ausgleichsströme sind im Verhältnis zu den Strömen im System relativ klein und entsprechend gering sind die Verluste im DC/DC Wandler, im Gegensatz zu anderen Systemen, bei denen die gesamten System-Ströme zwischen den unterschiedlichen Energiespeichern über DC/DC Wandler geschickt werden.

Weiterhin können in einem solchen Gesamtsystem auch Speicher-Batterien mit unterschiedlichem Alter bzw. Zustand und einer dementsprechend unterschiedlichen Restkapazität verwendet werden, so dass deren Nutzungsdauer insgesamt erheblich verlängert werden kann. Ein schwächer werdender erster Energiespeicher kann dann auch durch Nachrüstung weiterer parallelgeschalteter zweiter Energiespeicher kompensiert werden. Der gesteigerte wirtschaftliche Nutzen und die geringere Umweltbelastung sind erhebliche Vorteile eines solchen Gesamtsystems.

In einer vorteilhaften Ausgestaltung wird die erste Batterie oder Gruppe von in Reihe geschalteten ersten Batterien von einem oder mehreren Bleiakkumulatoren gebildet. Die zweite Batterie oder Gruppe von in Reihe geschalteten zweiten Batterien wird bevorzugt von einem oder mehreren Lithium-Akkumulatoren, Lithium-Eisen-Phosphat- Akkumulatoren, Lithium-Schwefel- Akkumulatoren oder Lithium-Luft- Akkumulatoren gebildet. Diese zweiten Batterien haben häufig eine hohe Zyklenfestigkeit; die Anschaffungskosten sind jedoch derzeit höher als die eines Bleiakkumulators. Die zweiten Batterien bzw. Akkumulatoren zeichnen sich zudem durch einen hohen elektrischen Wirkungsgrad aus. Wichtig ist dabei, dass die Spannung des zweiten Akkumulators so gewählt wird, dass weite Teile der Ladung und Entladung in einem Spannungsbereich stattfinden, der der Ladespannung des Bleiakkumulators sehr ähnlich ist und höher ist als die Spannung des Bleiakkumulators bei der Entladung.

Besonders geeignet ist hier beispielsweise zur Erreichung der gewünschten Spannungsdifferenz zwischen erstem und zweitem Energiespeicher das Zusammenschalten von drei Zellen eines Bleiakkumulators mit einer Nennspannung von jeweils ca. 2V als erstem Energiespeicher und zwei Zellen eines Lithium-Eisen-Phosphat-Akkumulators (LiFePO₄, LiFeYPO₄ und ähnliche Lithiumakkumulatoren) mit jeweils ca. 3,25V Nennspannung als zweitem Energiespeicher, das Zusammenschalten von sechs Zellen eines Bleiakkumulators mit einer Nennspannung von jeweils ca. 2V als erstem Energiespeicher und fünf Zellen eines Lithium-Titanat-Akkumulators (LTO, Li₄Ti₅O₁₂) und ähnliche Lithiumakkumulatoren mit jeweils ca. 2,4 V Nennspannung als zweitem Energiespeicher, oder ein Vielfaches dieser Anordnung. Dies wird zusätzlich durch den Verlauf der Lade- und Entladespannung eines Lithium-Eisen-Akkumulators begünstigt, der über weite Teile des Ladezustandes nur sehr wenig von der Nennspannung abweicht.

Gemäß der Erfindung ist weiterhin vorgesehen, dass die von einer Strombegrenzung, einer Stromregelung oder Stromsteuerung und/oder von wenigstens einem Trennschalter gebildete Schaltung die bevorzugte Ladung des ersten Energiespeichers ermöglicht sowie die Entladung des ersten und des zweiten Energiespeichers derart steuert, dass bei einem kleinen Entladestrom oder zum Laden des ersten Energiespeichers vorrangig der zweite Energiespeicher entladen wird und bei einem großen Entladestrom beide Energiespeicher synchron entladen werden, wofür durch die Strombegrenzung ein Spannungsgefälle zwischen dem ersten und dem zweiten Energiespeicher aufrechterhalten wird. Dadurch ist es möglich, ein Vollladen des ersten Energiespeichers sicherzustellen. Ebenso ist es damit möglich, den Lade- und Entladestrom des zweiten Energiespeichers zu begrenzen, womit der zweite Energiespeicher keinen übermäßig hohen Lade- und Entladeströmen ausgesetzt ist, was sich positiv auf dessen Lebensdauer auswirkt und eine kleinere Dimensionierung der Komponenten für eine Balancer- und Schutzschaltung des zweiten Energiespeichers erlaubt. Zudem kann der Trennschalter auch als Schutzschalter verwendet werden, der den zweiten Energiespeicher bei zu hohen oder zu tiefen Spannungen vom ersten Energiespeicher trennt, um Überspannung oder eine zu tiefe Entladung zu vermeiden. Die Ausführung dieser Schaltung kann auf unterschiedliche Weise verwirklicht werden.

Weiterhin ist vorteilhaft vorgesehen, dass über die Schaltung die Nachladung des ersten Energiespeichers aus dem zweiten Energiespeicher oder das bevorzugte Laden oder Entladen eines der Energiespeicher gesteuert werden kann. Dies ist dann sinnvoll, wenn der erste Energiespeicher - insbesondere die Bleibatterie(n) - durch begrenzte Ladezeit noch nicht vollständig aufgeladen ist. Die Bleibatterie kann dann auf dem Spannungslevel der Lithiumbatterie nachgeladen werden. Ebenso ist es möglich auf diesem Spannungslevel auch kleine Lasten zu versorgen, deren Strombedarf geringer ist als es die Strombegrenzung bzw. Stromregelung zulässt. Dieses Nachladen des ersten Energiespeichers ist nicht in jedem Fall gewünscht, da die die Gesamtlebensdauer begrenzende verfügbare Anzahl von Ladezyklen durch die Umladeströme beansprucht würde, wodurch die Lebensdauer des Systems reduziert würde. Das Nachladen kann daher durch den Einsatz des Trennschalters auch gezielt unterbunden werden, beispielsweise bei einer genügend vollgeladenen Bleibatterie, an der zum Zeitpunkt keine Entladung durch elektrische Lasten stattfindet.

Für ein kompaktes, einfach zu installierendes System ist es vorteilhaft, wenn die erfindungsgemäße Schaltung in einen Laderegler integriert ist. Dieser Laderegler ist häufig für eine bestimmte Energiequelle optimiert, wie ein Solar- oder Windkraftladeregler oder ein Laderegler zum Nachladen der Batterien aus dem Stromnetz. Wenn der zweite Energiespeicher - insbesondere die Lithiumbatterie(n) - und der Laderegler in einer Einheit zusammengeführt sind, ermöglicht dies den Anschluss des Hybridladereglers mit der gleichen Anschlussbelegung wie bei einem einfachen Laderegler für Bleibatterien, wo an drei Anschlusspaaren (je + und -) die Energiequelle, der Bleiakkumulator und die Lasten angeschlossen sind. Beispielhaft sei hier der Laderegler Steca PR 10-30 der Steca Elektronik GmbH, Memmingen, genannt. Dies hat den Vorteil, dass diese elektronische Schaltung mit den für Lithiumbatterien oft notwendigen Balancer- und Schutzschaltungen zu einer Einheit zusammengefasst werden kann und ermöglicht am Einsatzort eine einfache Installation mit wenigen Komponenten, die einfach zu verbinden sind.

Vorteilhaft ist in diesem Zusammenhang ein weiterer Anschluss für Lasten, der nur dann zugeschaltet wird, sobald das System einen definierten Ladezustand erreicht hat, um eine Priorisierung bei Lastabschaltungen zu ermöglichen. So ist es durch einfaches Anschließen an verschiedenen Kontakten möglich, dass z.B. ein Ventilator nur bei ausreichendem Ladezustand des zweiten Energiespeichers betrieben wird, während der erste Energiespeicher für höher priorisierte Lasten wie die Beleuchtung zur Verfügung steht.

Alternativ dazu ist vorgesehen, dass die Strombegrenzung, die Stromregelung und/oder der Trennschalter als eigenständige Schaltung zwischen dem ersten und zweiten Energiespeicher ausgebildet ist. Ein derart ausgebildetes System ist sehr universell verwendbar, da die erste Batterie, ausgeführt als Bleiakkumulator, direkt an einer Vielzahl von marktüblichen Produkten wie Ladereglern oder Generatoren angeschlossen werden kann, die für die Ladung entsprechender Akkutypen ausgelegt sind. Vorzugsweise wird in die erfindungsgemäße Schaltung auch die Laderegelung der zweiten Batterie mit Schutz- und Balancerschaltung integriert, damit die zweite Batterie inklusive der Schaltung mit geringem Installationsaufwand mit der Bleibatterie verbunden werden kann. Diese Lösung eignet sich damit auch für ein einfaches Nachrüsten bereits bestehender Bleibatteriesysteme, ohne dass Komponenten des bisherigen Systems ausgetauscht werden müssen.

Gemäß einer vorteilhaften Ausgestaltung der Erfindung ist vorgesehen, dass bei einer Schaltung eines erfindungsgemäßen Systems die Strombegrenzung als ohmscher Widerstand, als verstellbarer Widerstand, als PTC-Sicherung oder als Halbleiter ausgebildet ist. Die Strombegrenzung sorgt dafür, dass bei Überschreiten eines definierten Stromes ein Spannungsgefälle zwischen den beiden Energiespeichern erzeugt wird, um die Versorgung elektrischer Lasten aus beiden Energiespeichern parallel zu ermöglichen, oder die priorisierte Ladung des ersten Energiespeichers sicherzustellen. Durch die ähnliche Spannung beider Energiespeicher ist das notwendige Spannungsgefälle zwischen den beiden Energiespeichern relativ klein.

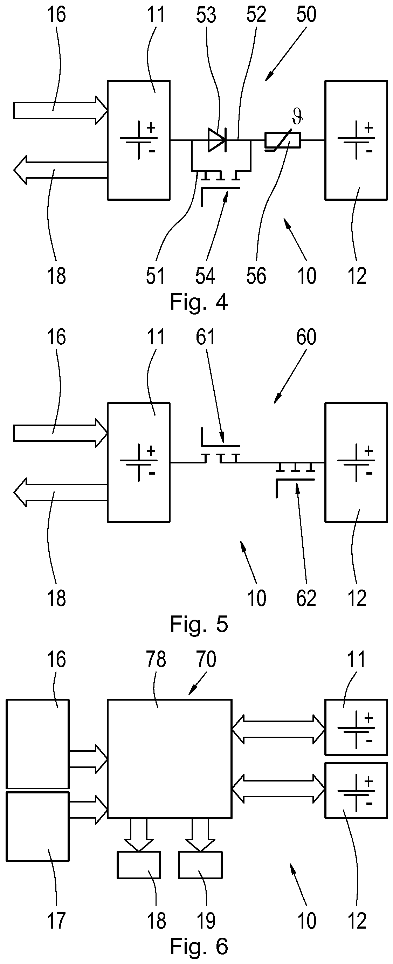

Dieses Spannungsgefälle kann durch verschiedene Bauteile erzeugt werden. Bei einem ohmschen Widerstand ist der Zusammenhang zwischen Strom und Spannungsabfall linear, was eine Begrenzung des Stromes ermöglicht, jedoch auch ein Spannungsgefälle bzw. eine ständige Verlustleistung in allen Arbeitsbereichen mit sich bringt. Vorteilhaft für die Effizienz ist es daher, den Widerstand je nach Betriebszustand verändern zu können, wie es beim verstellbaren Widerstand oder einem Bauelement aus Halbleitern möglich ist. Damit entsteht nur dann eine Verlustleistung im Bauelement, wenn es für den Betrieb des Systems notwendig ist. Ein besonders geeignetes Bauelement für eine einfache Umsetzung eines erfindungsgemäßen Systems ist die PTC-Sicherung, die bis zum Erreichen eines bestimmten Stromes einen sehr geringen Widerstand aufweist und bei Überschreiten dessen den Widerstand so weit erhöht, bis sich eine konstante Temperatur bzw. Wärmeabgabe am Bauelement einstellt. Als PTC-Widerstand sind beispielsweise Bauteile vom Typ Multifuse® der Firma Bourns oder vom Typ Polyswitch der Tyco International verwendbar. Während ein verstellbarer Widerstand oder Halbleiter angesteuert oder geregelt werden muss, regelt dieses Bauelement den Strom zwischen den Batterien ohne externe Ansteuerung. Erfindungsgemäß ist vorgesehen, dass für die vorrangige Ladung des ersten Energiespeichers durch geeignete antiseriell verschaltete Transistoren, die schaltend, analog oder getaktet betrieben werden, die parallel oder in Reihe zu der Strombegrenzung, der Stromregelung oder dem Trennschalter angeordnet sind, ein Spannungsgefälle zwischen dem ersten Energiespeicher und dem zweiten Energiespeicher aufrechterhalten wird. Für die bevorzugte Entladung des ersten Energiespeichers braucht es ebenfalls ein Spannungsgefälle, das eine höhere Spannung am zweiten Energiespeicher ermöglicht als am ersten Energiespeicher. Da sich die Stromrichtung bei Ladung und Entladung umkehrt, können dies für Ladung und Entladung prinzipiell dieselben Bauelemente sein. Durch Parallel- oder Reihenschaltung besonders mit Halbleiterelementen ist es möglich, unterschiedliche Kriterien für Ladung und Entladung umzusetzen. So ist zum Beispiel (wie in Fig. 4 gezeigt - nicht erfindungsgemäß) mit einer parallel geschalteten Diode stets ein Laden der Lithiumbatterie mit weitgehend konstantem Spannungsgefälle möglich, während ein Rückstrom in diesem Zweig verhindert ist, der dann beispielsweise mittels eines MOS-FET-Transistors separat geschaltet werden kann.

Ein besonders bevorzugtes Speichersystem zeichnet sich dadurch aus, dass in der Schaltung zusätzlich oder alternativ zur Strombegrenzung ein Trennschalter vorhanden ist und dass die Funktionen Strombegrenzung und/oder Trennschalter durch einen oder mehrere Halbleiter gebildet sind, die als mehrere antiseriell verschaltete Transistoren ausgebildet sind, die schaltend, analog oder getaktet angesteuert werden. Bestimmte Bauelemente aus Halbleitern ermöglichen es, bei unterschiedlicher Ansteuerung sowohl einen Spannungsabfall zu verursachen als auch die Funktion eines Trennschalters zu übernehmen, die je nach Richtung des Stromflusses unterschiedlich angesteuert werden. Dies wird insbesondere mit antiseriell verschalteten Transistoren erreicht.

Es ist weiterhin vorteilhaft, wenn die Speicherkapazität des zweiten Energiespeichers etwa einem Tagesbedarf des wenigstens einen elektrischen Verbrauchers beträgt und die Speicherkapazität des ersten Energiespeichers das typischerweise ein- bis sechsfache dieser Kapazität als Reservekapazität beträgt. Die Größe der benötigten Reservekapazität richtet sich nach den Ertrags- und Lastprofilen sowie der geforderten Versorgungssicherheit. Dadurch wird die Bleibatterie an einem Tag mit typischen Erträgen und Lasten nicht stark entladen, und der Großteil der Ladezyklen wird von der Lithiumbatterie abgedeckt. Die Bleibatterie steht als Reservekapazität zur Verfügung und kann genutzt werden, um erhöhten Energiebedarf oder Zeiten mit geringerem Ertrag abzudecken, was vor allem bei regenerativen Energieträgern wie Fotovoltaik oder Windkraft sinnvoll ist. Zudem ist eine große Bleibatterie gut in der Lage, große Ströme und Lastspitzen zu versorgen, wie sie z.B. beim Einschalten von Motoren auftreten.

Die wenigstens eine Energiequelle wird insbesondere von einer Fotovoltaik-Anlage, einer Lichtmaschine, einem Generator und/oder von einem Energieverteilungsnetz gebildet. Die Kombination der beiden Energiespeicher ist vor allem da sinnvoll, wo dezentral oder regenerativ verfügbare Energie derart genutzt wird, dass die Energie über Fotovoltaik oder über einen Generator in elektrische Energie gewandelt wird oder wenn die Ladezeit der Batterie begrenzt ist - wie die Aufladung während einer zeitlich begrenzten Autofahrt. Zudem ist das System sehr gut geeignet, um Verbraucher bei unzuverlässigem Stromnetz kontinuierlich zu versorgen. Hierbei ist auch die Lithiumbatterie für häufige kurze Unterbrechungen vorgesehen und die Bleibatterie für seltenere größere Unterbrechungen.

Dabei ist es besonders vorteilhaft, wenn der erste Energiespeicher aus einem Energieverteilungsnetz geladen wird, während die Kapazität des zweiten Energiespeichers als Pufferspeicher für unregelmäßig verfügbare Energie, wie regenerative Energie, vorgehalten wird. In Kombination von Energieverteilungsnetz und regenerativer oder dezentral gewandelter Energie kann die Bleibatterie als Backup für die Versorgung elektrischer Lasten verwendet werden, und wird aus dem Energieverteilungsnetz auch in vollgeladenem Zustand gehalten. Solange genügend Energie aus anderen Energieträgern zur Verfügung steht, werden Überschüsse in der Lithiumbatterie gepuffert und von dort auch vorrangig zur Bedienung der Last(en) bereitgestellt. Erst wenn keine Energie in der Lithiumbatterie mehr verfügbar ist, wird diese aus dem Energieverteilungsnetz bezogen und erst bei einem längeren Ausfall oder zur Pufferung eines kurzfristigen Spitzenbedarfs die Bleibatterie verwendet.

Schließlich ist es von Vorteil, wenn beide Energiespeicher mit Einrichtungen zur Messung ihrer Spannungen und/oder ihrer Ströme versehen sind und die von den Einrichtungen gemessenen Werte als Steuersignale der Stromregelung, der Stromsteuerung und/oder dem Trennschalter zuführbar sind. Damit kann eine Auswertung dieser Informationen, beispielsweise in einem Mikrocontroller, dazu verwendet werden, die aktuellen Zustände der Batterien zu erfassen und entsprechende Signale an die Schaltung für die Regelung oder Steuerung oder auch für einen Balancer zu generieren.

Nachfolgend werden Ausführungsbeispiele der Vorrichtung unter Bezugnahme auf die Zeichnungen näher erläutert. Es zeigt:
- Fig. 1: ein Speichersystem mit einer Strombegrenzung und einem Trennschalter zwischen den beiden Energiespeichern;
- Fig. 2: ein Speichersystem mit einer Parallelschaltung, die unterschiedliche Leitungswege für Ladung und Entladung vorsieht,
- Fig. 3: ein Speichersystem mit einem dem ersten Energiespeicher eingangsseitig vorgeschalteten Laderegler und einer Stromregelung zwischen den beiden Energiespeichern, die aus einer Parallelschaltung eines Transistors und einer Diode und einer dazu in Reihe geschalteten Strombegrenzung gebildet ist;
- Fig. 4: ein Speichersystem mit einer Stromregelung analog zur Fig. 3;
- Fig.5: eine erfindungsgemäße Ausführungsform eines Speichersystems bei der zwischen den beiden Energiespeichern zwei anti-seriell angeordnete Transistoren bzw. MOSFET eingesetzt werden;
- Fig. 6: ein Speichersystem bei dem die Strombegrenzung und/oder die Stromregelung in einen Laderegler integriert ist;
- Fig. 7: ein Diagramm zur Verdeutlichung des Ladezustands der zwei verschiedenen Energiespeicher;
- Fig. 8: ein Diagramm zur Verdeutlichung des Spannungsverlaufs der zwei verschiedenen Energiespeicher passend zu Fig. 7, und
- Fig. 9: eine Reihenschaltung mehrerer Hybrid-Speichersysteme zu einem Gesamtsystem.

Die folgenden Ausführungsbeispiele sind anhand eines Systems mit einem von einem Bleiakkumulator mit 12V Nennspannung gebildeten ersten Energiespeicher 11 und einem vier Zellen mit einer Nennspannung von etwa 13,2V aufweisenden Lithium-Eisen-Phosphat-Akkumulator als zweitem Energiespeicher 12 dargestellt. Es sind jedoch auch andere Energiespeicher und andere Spannungslevel einsetzbar, soweit diese entsprechend der Patentansprüche einsetzbar sind.

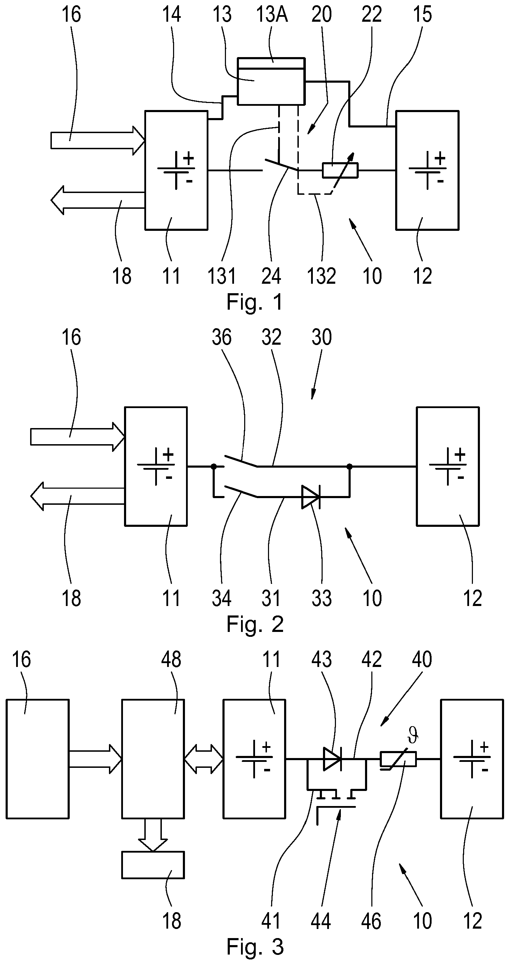

In Fig. 1 ist ein Speichersystem 10 mit einem ersten Energiespeicher 11 und einem zweiten Energiespeicher 12 gezeigt. Der erste Energiespeicher 11 ist mit einer Energiequelle 16 und mit wenigstens einer Last 18 verbunden. Zwischen dem ersten Energiespeicher 11 und dem zweiten Energiespeicher 12 sind eine Strombegrenzung 22 und ein Schalter 24 angeordnet, die beispielhaft durch einen verstellbaren Widerstand 22 und einen dazu in Reihe geschalteten Schalter 24 gebildet sind.

In Fig. 1 ist schematisch eine auch für die anderen Figuren 2 bis 6 verwendbare und bei diesen nicht gezeigte Signalverarbeitung z.B. durch einen Mikrocontroller 13 exemplarisch dargestellt. Der Mikrocontroller 13 ist eingangsseitig über eine Messwerterfassung 14 mit dem ersten Energiespeicher 11 und über eine Messwerterfassung 15 mit dem zweiten Energiespeicher 12 verbunden. Die Messwerterfassungen 14 bzw. 15 liefern beispielsweise den aktuellen Spannungswert V₁₁ bzw. V₁₂ des ersten und zweiten Energiespeichers 11 bzw.12 als Eingangswerte an ein im Mikrocontroller 13 gespeichertes Steuerungs- oder Regelungsprogramm, das entsprechend der gelieferten Messwerte einen ersten Schaltausgang 131 zur Betätigung des Schalters 24 und/oder einen zweiten Schaltausgang 132 zur Verstellung des verstellbaren Widerstandes 22 ansteuert.

Alternativ oder ergänzend zu den Spannungswerten V₁₁ bzw. V₁₂ können auch die von und zu den Energiespeichern 11 bzw.12 fließenden Ströme I₁₁ bzw. I₁₂ durch die Messwerterfassungen 14 bzw. 15 erfasst und als Eingangssignal an den Mikrocontroller 13 weitergeleitet werden. Als weitere Messwerteingänge können auch der von der Energiequelle 16 aktuell gelieferte Strom und/oder der von der Last 18 aktuell bezogene Strome und/oder der aktuell zwischen den Energiespeichern 11 bzw. 12 fließende Strom an den Mikrocontroller 13 geliefert werden. Der Mikrocontroller 13 ist auch für die im Folgenden beschriebenen Ausführungsformen gemäß den Figuren 2 bis 6 zur Ansteuerung der dort verwendeten Schalter und Transistoren verwendbar.

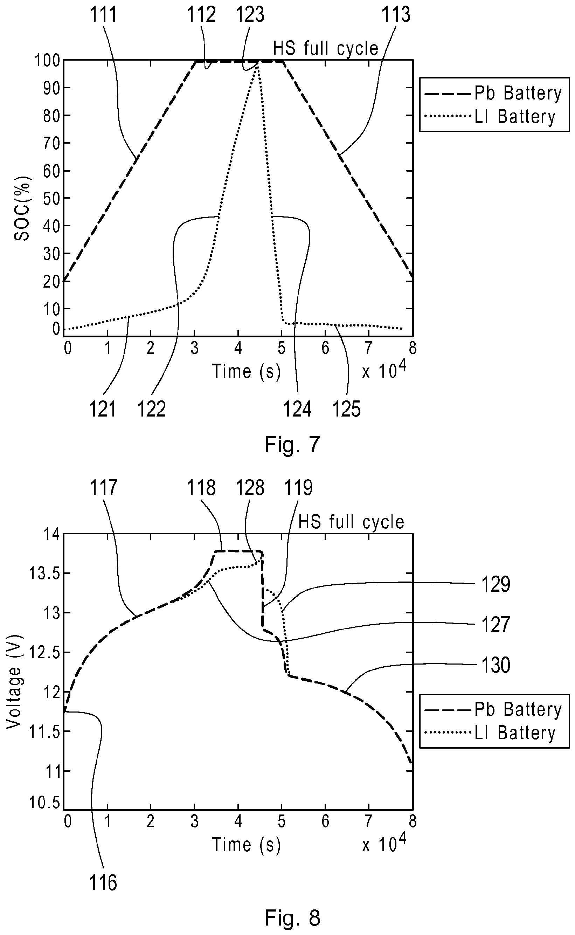

Das Zusammenwirken der beiden Energiespeicher im Speichersystem ist in Fig. 7 und 8 am Beispiel von Bleiakkumulator und Lithium-Eisen-Phosphat-Akkumulator beschrieben. Darauf bezogen wird der Widerstand während der Ladung so gewählt, dass der zwischen den Ladekurven 127 und 118 entstehende Spannungsunterschied gebildet wird. Bei der Entladung wird der Widerstand entweder minimal gewählt, wodurch die zweite Batterie 12 die Last auf höherem Spannungslevel versorgt, oder vor allem bei großen Strömen der Widerstandswert so weit erhöht, dass die Last auf dem Spannungsniveau der ersten Batterie 11 versorgt werden kann. Der Trennschalter 24 trennt die zweite Batterie 12 zum Schutz vor Über- oder Unterspannungen wie bei so großen Strömen bzw. Spannungseinbrüchen, die durch Spannungsabfall in der Stromregelung nicht sinnvoll auszugleichen sind, beispielsweise der Startvorgang eines Kraftfahrzeugs, der eine große Lastspitze sehr kurzer Dauer darstellt.

In Fig. 2 ist ein Speichersystem 10 mit einer Parallelschaltung gezeigt, die unterschiedliche Leitungswege für Ladung und Entladung vorsieht (gemäß Anspruch 9) jedoch in diesem Fall ohne Strombegrenzung. Eine gemeinsam mit einem Schalter 34 in einem ersten Zweig 31 einer Parallelität angeordnete Diode 33 erzeugt dort ein Spannungsgefälle für eine vorrangige Ladung des ersten Energiespeichers 11, was bei der Ladung des zweiten Energiespeichers 12 einen weitgehend konstanten Spannungsabfall von ca. 0,5V bedeutet und die Ladung des ersten Energiespeichers 11 priorisiert. Ein parallel angeordneter Schalter 36 ist beim Laden des zweiten Energiespeichers 12 geöffnet, so dass für das Laden der untere Zweig 31 über den geschlossenen Schalter 34 und die Diode 34 verwendet wird. Der obere Zweig 32 ist für die Entladung des zweiten Energiespeichers 12 vorgesehen. Einfache Regeln für die Schaltung sind, den Schalter 36 geschlossen zu halten wenn eine Strommessung einen Strom von der zweiten Batterie 12 in die erste Batterie 11 anzeigt, oder das Spannungslevel der ersten Batterie 11 unterhalb der Spannung der zweiten Batterie 12 liegt. Der Schalter 34 kann im normalen Betrieb geschlossen bleiben und wird bei zu hohen Spannungen geöffnet um die zweite Batterie 12 vor Überspannung zu schützen.

In Fig. 3 ist ein Speichersystem 10 dargestellt, bei der die Schaltung (nach Ansprüchen 1-5 mit einer Anordnung nach Anspruch 7) zwischen dem ersten Energiespeicher 11 und dem zweiten Energiespeicher 12 angeordnet ist. Die Schaltung zwischen den Batterien ist hier nur beispielhaft für eine der möglichen Schaltungen eingezeichnet und wird in Fig. 4 näher beschrieben.

Ein Laderegler 48, der eingangsseitig mit der Energiequelle 16 und ausgangsseitig mit der wenigstens einen Last 18 verbunden ist, ist am ersten Energiespeicher 11 angeschlossen. Die Schaltung und die zweite Batterie 12 bilden eine Einheit, die ebenfalls an die erste Batterie 11 angeschlossen sind und sich unterstützend auf die erste Batterie 11 auswirken. Der Laderegler 48 kann in diesem Fall von einer handelsüblichen Komponente für Bleiakkus gebildet werden. Der Laderegler 48 arbeitet unabhängig von der vorstehend beschriebenen Schaltung zwischen dem ersten Energiespeicher 11 und dem zweiten Energiespeicher 12. Der Laderegler 48 bedient hier vorrangig direkt die Last 18 und lädt die erste Batterie 11 nur dann, wenn mehr Energie von der Energiequelle 16 kommt, als die Last 16 verbraucht.

In Fig. 4 ist ein Speichersystem 10 dargestellt, mit einem Transistor 54 und parallel geschalteter Diode 53, die in Reihe mit einer Strombegrenzung 56 angeordnet sind. Der Transistor 54 und die parallel dazu geschaltete Diode 53 bewirken eine Ladung des zweiten Energiespeichers 12 mit einem Spannungsabfall über die in einem zweiten Leitungsweg 52 angeordnete Diode 53 (wie in Fig. 2 beschrieben), während im dazu parallelen ersten Leitungsweg 51 der Transistor 54 für die Entladung der zweiten Batterie 12 durchgeschaltet wird. Die in diesem Fall besonders vorteilhaft von einem PTC-Widerstand gebildete, zur Parallelität aus Transistor 54 und Diode 53 in Reihe geschaltete Strombegrenzung 56 stellt sicher, dass kein zu hoher Strom in den zweiten Energiespeicher 12 und aus dem zweiten Energiespeicher 12 fließt, so dass die den zweiten Energiespeicher 12 bevorzugt bildende Lithiumbatterie und die Komponenten der Schaltung nur für einen entsprechenden maximalen Strom ausgelegt sein müssen.

Der PTC-Widerstand 46 ist vom Strom in die und aus der zweiten Batterie 12 durchflossen. Bei ansteigendem Strom erwärmt sich dieser und erhöht dabei gleichzeitig selbsttätig seinen Widerstand, wodurch er den Strom zum zweiten Energiespeicher 12 unter Abgabe einer geringen konstanten Verlustleistung von beispielsweise 3 W dauerhaft begrenzt. Ein erfindungsgemäßes System, dass zwischen dem ersten Energiespeicher 11 und dem zweiten Energiespeicher 12 nur einen PTC-Widerstand 46 aufweist, stellt unter Erfüllung aller weiterer Merkmale des Anspruchs 1 die einfachste und somit äußerst vorteilhafte Ausführungsform der Erfindung dar, die ohne zusätzliche Regelung, Steuerung oder Messwerterfassung 14, 15 auskommt.

In Fig. 5 ist eine erfindungsgemäße Ausführungsform eines Speichersystems 10 dargestellt, bei der zwei anti-seriell angeordnete Transistoren (z.B. MOSFET Transistoren) 61 bzw. 62 eingesetzt werden. Mit dieser Anordnung (nach Anspruch 10) ist es möglich, die Stromflüsse in beide Richtungen zu regeln oder zu steuern oder in eine Richtung oder beide Richtungen zu unterbrechen. Die Möglichkeiten der Regelung und Steuerung sind hier sehr vielfältig und so kann hier die Zuschaltung oder Abschaltung des zweiten Energiespeichers 12 zum Laden oder Entladen nicht nur spontan, sondern auch gleitend erfolgen. Die Ansteuerung dieser Schaltung ist daher vor allem mit einer im Zusammenhang mit Fig. 1 beschriebenen Auswertung und Verarbeitung von Messdaten 14, 15 in einer signalverarbeitenden Steuerung bzw. Regelung, beispielsweise durch einen Mikrocontroller 13 sinnvoll.

In Fig. 6 ist ein Speichersystem 10 (nach den Ansprüchen 1-5 mit einer Anordnung nach Anspruch 6) dargestellt. Dabei wird eine Schaltung analog zu den vorstehend beschriebenen Ausführungsbeispielen gemäß einer der Figuren 1 bis 5 einschließlich einer Laderegelung, einer Schutz- und Balancerschaltung als zentrale Laderegler-Einheit 78 ausgebildet, an die alle Energiespeicher 11, 22, alle Lasten 18, 19 und alle Energiequellen 16, 17 angeschlossen werden.

Unter Balancerschaltung versteht der Fachmann eine Schaltung, der die gleichmäßige Spannung bzw. Vollladung aller Zellen innerhalb eines Akkupacks bzw. einer Batterie aus Akkumulatoren 11 bzw. 12 gewährleistet. Das sind beispielsweise Widerstände parallel zu jeder einzelnen Zelle, die zugeschaltet werden, wenn eine Zellspannung einen vorgegebenen Wert übersteigt. Dann wird an dieser Zelle Energie in Wärme gewandelt, was deren Spannung etwas absenkt, während die anderen Zellen, die noch nicht voll sind, weiter geladen werden.

In Fig. 7 ist der Ladezustand (SOC = State of Charge) der beiden Energiespeicher 11 bzw. 12 über der Zeitachse aufgetragen. Im zeitlichen Ablauf ist eine vollständige Ladung mit anschließender Entladung darstellt. Zuerst wird der erste Energiespeicher 11 (Bleibatterie) vorrangig geladen (wie mit dem ansteigenden Ast 111 der gestrichelten Ladekurve des ersten Energiespeichers 11 angedeutet), während der zweite Energiespeicher 12 (Lithiumbatterie) unter gleicher Spannung zunächst nur in geringem Maße mit geladen wird, wie dies durch den schwach ansteigenden Ast 121 der punktierten Ladekurve des zweiten Energiespeichers 12 angedeutet ist. Wenn der erste Energiespeicher 11 (Bleibatterie) dann mit konstanter Spannung geladen wird (wie mit dem waagerechten Ast 112 der gestrichelten Ladekurve des ersten Energiespeichers 11 angedeutet) und nicht mehr allen verfügbaren Strom aufnehmen kann, erfolgt die Ladung des zweiten Energiespeichers 12 (Lithiumbatterie) mit dem Strom, den die Bleibatterie nicht mehr aufnehmen kann entsprechend des Abschnitts 122 der punktierten Ladekurve. Entladen wird in diesem Fall vorrangig die Lithiumbatterie 12, die eine höhere Spannung aufweist als die Bleibatterie 11 entsprechend des abfallenden Asts 124 der punktierten Ladekurve. Hier nicht dargestellt ist die synchrone Entladung beider Energiespeicher 11 bzw. 12 auf dem Spannungslevel der ersten Batterie oder das Fließen von Umladeströmen vom zweiten Energiespeicher 12 in den ersten Energiespeicher 11, zu denen es bei nicht ganz voller Bleibatterie kommen kann während die Lithiumbatterie auf hohem Spannungslevel die Last mit Energie versorgt.

In Fig. 8 ist der Spannungsverlauf der beiden Batterien 11 bzw. 12 über der Zeitachse aufgetragen, entsprechend der in Fig. 7 dargestellten Ladung und Entladung beider Energiespeicher 11 bzw. 12. Beim Laden muss die Spannung der Bleibatterie 11 zeitweise höher sein, damit diese bevorzugt geladen wird. Dafür wird die zweite Batterie 12 von der ersten Batterie 11 getrennt oder ein Spannungsabfall bzw. eine Strombegrenzung durch Widerstand oder Halbleiter aktiviert, wie in den Figuren 1 bis 6 anhand unterschiedlicher Ausführungsbeispiele bereits erläutert wurde. Beim Entladen mit geringem Strom wird wie dargestellt zuerst die Lithiumbatterie 12 entladen. Dabei wird das Spannungsniveau der Bleibatterie 11 auf die Spannung der Lithiumbatterie 12 angehoben, was geringe Umladeströme aus der Lithiumbatterie 12 in die Bleibatterie 11 bedeuten kann.

Bei Entladen mit großem Strom wird der Entladestrom des zweiten Akkus 12 begrenzt, indem ein Spannungsgefälle geschaffen wird. Dafür werden beide Batterien 11 und 12 gemeinsam entladen, was für beide Batterien einen vorteilhaften geringeren Entladestrom bedeutet. Im Bereich unter ca. 13V, was der typischen Entladespannung der Bleibatterie 11 entspricht, ändert die Lithium-Eisen-Phosphat- Batterie 12 ihren Ladezustand nur um wenige Prozent, wie in Fig. 7 dargestellt. Ihre Spannung passt sich der Spannung der Bleibatterie 11 an. Optional kann die weitgehend leere Lithiumbatterie 12 auch durch einen Trennschalter 24, 36 von der Bleibatterie 11 getrennt werden, um eine sehr tiefe Entladung zu vermeiden.

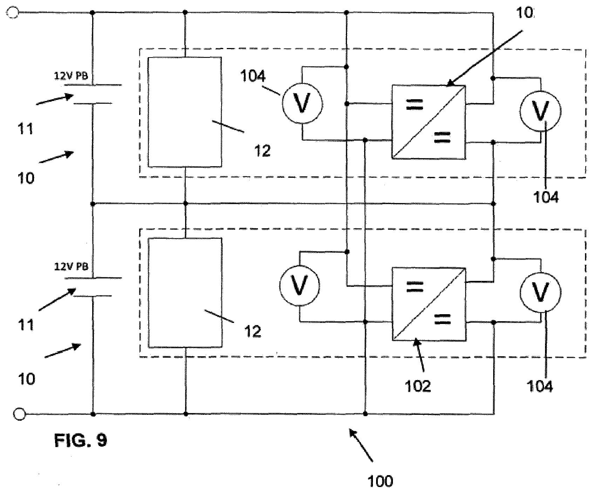

Wie in Fig. 9 gezeigt, sind mehrere der vorstehend beschriebenen Hybrid-Speichersysteme 10 außerdem vorteilhaft zu einem Gesamtsystem 100 in Reihe schaltbar. Im Ausführungsbeispiel gemäß Fig. 9 sind dies zwei Hybrid-Speichersysteme 10, die jeweils aus einem ersten Energiespeicher 11 und einem zweiten Energiespeicher 12 gebildet werden. Jedes Hybrid-Speichersystem 10 ist beispielsweise für eine Nennspannung von 12V ausgelegt, so dass das in Fig. 9 gezeigte Gesamtsystem 100 insgesamt eine Nennspannung von 24V aufweist.

Zum Beispiel werden in dem gezeigten 24V-System die zwei in Reihe geschalteten 12V- Bleibatterien 11 durch zwei parallel dazu geschaltete 12V Li-Batteriepacks 12 unterstützt. Die Li-Batteriepacks 12 mit ihrer Steuerung 13 messen die Spannung U₁₀₀ des Gesamtsystems und können anhand dieses Parameters die Unterstützung der ersten Batterie 11 so beeinflussen, dass Unterschiede in Ladezustand, Spannung oder Kapazität der in Reihe geschalteten ersten Batterien 11 ausgeglichen werden können.

Es können selbstverständlich auch mehr als zwei Hybrid-Speichersysteme 10 auf diese Art zusammengeschaltet werden, beispielsweise vier Hybrid-Speichersysteme 10 zu einem Gesamtsystem 100 mit einer Nennspannung von 48V. Ebenso ist beispielsweise eine Zusammenschaltung von vier 6V Hybridsystemen zu einem 24V Gesamtsystem möglich.

Jedem der Hybrid-Speichersysteme 10 ist ein DC/DC-Wandler 102 zugeordnet. Zu beiden Seiten des DC/DC-Wandlers 102 erfasst ein Spannungsmesser 104 die Spannungen des ersten Energiespeichers 11 und des Gesamtsystems 100.

Die gemessenen Spannungen U₁₁ bzw. U₁₂ werden mit dem rechnerischen Anteil an der Gesamtspannung verglichen und das Energiesystem mittels der Steuerung 13 auf diesen Sollwert ausgeregelt um eine gleichmäßige Vollladung der ersten Batterien 11 sicherzustellen.

Alternativ zur Messung der Gesamtspannung können die Betriebsdaten der einzelnen Speichersysteme mit einer Datenkommunikation untereinander kommuniziert und ausgewertet oder an eine nicht dargestellte übergeordnete Steuerung übermittelt werden. Diese sorgt dafür, dass zusätzlich zur Spannung jedes der Hybrid-Speichersysteme 10 die Spannung U₁₀₀ des Gesamtsystems 100 ermittelt, verarbeitet und entsprechend geregelt wird.

Wenn die zweite Batterie 12 einen höheren Wirkungsgrad als die erste Batterie 11 hat - was ist bei einer Kombination aus Bleiakkumulatoren 11 und LithiumBatterien 12 der Fall ist - und in der Reihenschaltung der ersten Batterien 11 Kapazitätsunterschiede auftreten, driftet der Ladezustand der zweiten Batterien 12 auseinander. Deshalb ist vorgesehen, dass die 12V Li-Batteriepacks 12 eine Steuerung einschließlich einer Messung der Gesamtspannung U₁₀₀ und einen DC/DC Wandler 102 eingebaut haben, der verglichen mit der Leistung des Gesamtsystems relativ klein (nur für Ausgleichsströme) ausgelegt werden kann. Um die Energiespeichersysteme 10 universell aufbauen zu können, ist ein potentialfreier DC/DC Wandler 102 besonders vorteilhaft, da die einzelnen Energiespeichersysteme 10 ein unterschiedliches Potential bezogen auf das Gesamtsystem 100 aufweisen. Besonders vorteilhaft sind folgende Ausführungen:
- Wenn ein Speichersystem 10 feststellt, dass seine Spannung proportional über seinem Anteil an der Gesamtspannung U100 liegt, wird über den DC/DC Wandler 102, ausgeführt als Hochsetzer, aus dem volleren Speichersystem 10 zusätzliche Energie in das Gesamtsystem 100 abgegeben.
- Alternativ, wenn ein Speichersystem 10 feststellt, dass seine Spannung proportional geringer ist als sein Anteil an der Gesamtspannung U₁₀₀ , wird dieses Speichersystem 10 den DC/DC Wandler 102, ausgeführt als Tiefsetzer, zuschalten und sich damit zusätzlichen Ladestrom aus der Systemspannung abgreifen.
- Alternativ können die einzelnen Steuerungen 13 der Batteriepacks 11 bzw. 12 der Speichersysteme 10 über Signale miteinander kommunizieren anstelle die Gesamtspannung individuell auszuwerten, um auf dieser Basis das Verhalten von Hybrid-Schaltung oder Balancer zu steuern.

In einer vorteilhaften Weiterbildung ist vorgesehen, dass Betriebsdaten des ersten und zweiten Energiespeichers 11 bzw. 12, wie die Spannung, der Ladezustand oder der Zeitpunkt der letzten Vollladung mittels der Steuerung (Microcontroller) 13 überwacht, gespeichert und optional über eine Schnittstelle 13A an andere Geräte wie z.B. externe Anzeigeeinheiten, Mobiltelefone oder Server ausgeben werden.

Ferner können diese Werte gemäß einer vorteilhaften Weiterbildung der Erfindung für die Steuerung von Lastausgängen oder die Weiterleitung von Überschüssen in andere Energiespeicher, wie beispielsweise insbesondere thermische Energiespeicher verwendet werden. Somit kann rechtzeitig vor einem Überladungszustand die überschüssige Energie vom elektrischen Speichersystem umgeleitet und beispielsweise zur Erzeugung thermischer Energie - beispielsweise zur Aufheizung eines Warmwasserspeichers oder zur Beladung eines Eisspeichers zu Kühlzwecken - verwendet werden.

Bevorzugte Anwendungsbeispiele der Erfindung:
Die in Fig. 9 gezeigte Schaltung macht Sinn für Anwendungen mit Bleibatterien >12V, z.B. für autarke Telekommunikations-Funkmasten mit 48V, für elektrische Hausspeicher in Deutschland, für Second-Use Anwendungen alter Bleibatterien, evtl. auch um die weitere Verwendung älterer PKW- und LKW-Batterien in stationären Anwendungen zu unterstützen.

### Bezugszeichenliste

| | | | |
|---|---|---|---|
| 10 | Speichersystem | 40 | Schaltung (Fig. 3) |
| 11 | erster Energiespeicher (BleiAkkumulator) | 41 | (erster) Leitungsweg |
| | | 42 | (zweiter) Leitungsweg |
| 12 | zweiter Energiespeicher (Lithium-Akkumulator) | 43 | Diode |
| | | 44 | Transistor |
| 13 | Signalverarbeitung (z.B. Mikrocontroller) | 46 | Strombegrenzung (z.B. PTC-Sicherung) |
| 13A | Schnittstelle | 48 | Laderegler mit Lastausgang |
| 131 | Signalausgang | 50 | Schaltung (Fig. 4) |
| 132 | Signalausgang | 51 | (erster) Leitungsweg |
| 14 | Messwerterfassung (z.B. Spannung, Strom) | 52 | (zweiter) Leitungsweg |
| | | 53 | Diode |
| 15 | Messwerterfassung (z.B. Spannung, Strom) | 54 | Transistor |
| | | 56 | Strombegrenzung (z.B. PTC-Sicherung) |
| 16 | Energiequelle (z.B. PV-Anlage) | | |
| | | 60 | Schaltung (Fig. 5) |
| 17 | Energiequelle (z.B. Energieverteilungsnetz) | 61 | Transistor |
| | | 62 | Transistor |
| 18 | Verbraucher (Last) | 70 | Schaltung (Fig. 6) |
| 19 | Verbraucher (Last) | 78 | erfindungsgemäßes System in Laderegler integriert |
| 20 | Schaltung (Fig. 1) | | |
| 22 | Strombegrenzung (z.B. verstellbarer Widerstand) | 100 | Gesamtsystem |
| | | 102 | DC/DC-Wandler |
| 24 | (Trenn-) Schalter | 104 | Spannungsmesser |
| 30 | Schaltung (Fig. 2) | | |
| 31 | (erster) Leitungsweg | 111 | (ansteigende) Ladekurve (Laden von 11 mit hohem Strom) |
| 32 | (zweiter) Leitungsweg | | |
| 33 | Diode | 112 | Ladekurve (Vollladung von 11 bei geringem Strom) |
| 34 | erster (Trenn-) Schalter | | |
| 36 | zweiter (Trenn-) Schalter | | |
| 113 | (abfallende) Entladekurve (von 11) | 119 | (abfallende) Betriebsspannung (von 11 und von 12 aufgrund beginnender Entladung |
| 121 | (flach ansteigende) Ladekurve (kleiner Ladestrom von 12) | | |
| | | 127 | Ladekurve (von 12, Spannung niedriger als von 11) |
| 122 | (steil ansteigende) Ladekurve (hoher Ladestrom von 12) | | |
| | | 128 | Vollladung (von 12) |
| 123 | Vollladung (11 und 12 voll) | 129 | Entladespannung (von 12, ist höher als die von 11) |
| 124 | (steil abfallende) Entladekurve (vorrangige Entladung von 12) | | |
| | | 130 | Entladespannung (von11, dabei ist12 weitgehend leer) |
| 125 | (flach abfallende) Entladekurve (12 ist weitgehend leer) | | |
| | | | |
| 116 | Ladebeginn (vorrangig von 11) | + | Plus-Pol |
| 117 | Lade-Spannungsverlauf (bestimmt durch 11 bei Ladung mit hohem Strom) | - | Minus-Pol |
| 118 | Laden mit Konstantspannung (von 11) | | |

## Patentansprüche

1. Speichersystem (10) zur Speicherung elektrischer Energie mit wenigstens einem ersten Energiespeicher (11) und mit wenigstens einem zweiten Energiespeicher (12), die eine unterschiedliche Zyklenfestigkeit und/oder Lade- und Entladecharakteristik aufweisen und durch eine Parallelschaltung zur Entladung mit wenigstens einem elektrischen Verbraucher (18; 19) und zur Ladung mit wenigstens einer Energiequelle (16) verbunden sind, wobei der zweite Energiespeicher (12) gegenüber dem ersten Energiespeicher (11) eine höhere im Bereich der Ladespannung des ersten Energiespeichers (11) liegende Nennspannung aufweist, wodurch er bei Entladung vorrangig entladen wird und wobei für die vorrangige Ladung des ersten Energiespeichers oder zum Schutz oder zur Regelung des zweiten Energiespeichers (12) zusätzlich ein Spannungsgefälle zwischen dem ersten Energiespeicher (11) und dem zweiten Energiespeicher (12) mittels einer Schaltung (60) mitmehreren Halbleitern (61; 62) aufrechterhalten wird, **dadurch gekennzeichnet, dass** die Halbleiter (61; 62) als antiseriell verschaltete Transistoren (61; 62) ausgebildet sind, die schaltend, analog oder getaktet betrieben werden.

2. Speichersystem, insbesondere nach Anspruch 1, **dadurch gekennzeichnet, dass** mehrere Speichersysteme (10) zu einem Gesamtsystem (100) in Reihe geschaltet werden (12) wobei jedes dieser Speichersysteme (10) oder eine übergeordnete Steuerung die Spannungen (U₁₀) im jeweiligen Speichersystem (10) und die Spannung (U₁₀₀) des Gesamtsystems (100) erfasst, verarbeitet und die Betriebsparameter der in Reihe geschalteten ersten Energiespeicher (11) durch individuelles Zuschalten der zweiten Energiespeicher (12) regelt.

3. Speichersystem nach Anspruch 2, **dadurch gekennzeichnet, dass** bei unterschiedlichen Ladezuständen der Speichersysteme (10) mittels eines DC/DC Wandlers (102) Ausgleichsströme zwischen den Energiespeichern (11; 12) eines Speichersystems (10) und dem Gesamtsystem (100) unter Berücksichtigung der einzelnen Spannungen (U₁₀) und der Gesamtspannung (U₁₀₀) ermöglicht werden oder mit einem galvanisch getrennten DC/DC Wandler Ausgleichsströme zwischen den Speichersystemen (10) ermöglicht werden.

4. Speichersystem nach einem der vorhergehenden Ansprüche, **dadurch gekennzeichnet, dass** der erste Energiespeicher (11) von einem oder mehreren Bleiakkumulatoren (11) gebildet wird und der zweite Energiespeicher (12) von einem oder mehreren Lithium-Akkumulatoren, Lithium-Eisen-Phosphat- Akkumulatoren, Lithium-Schwefel- Akkumulatoren, Lithium-Titanat-Akkumulatoren oder Lithium-Luft- Akkumulatoren gebildet wird.

5. Speichersystem nach einem der vorhergehenden Ansprüche, **dadurch gekennzeichnet, dass** die Schaltung (60) die bevorzugte Ladung des ersten Energiespeichers (11) ermöglicht sowie die Entladung des ersten und der zweiten Energiespeichers (11; 12) derart steuert, dass bei einem kleinen Entladestrom vorrangig der zweite Energiespeicher (12) entladen wird und bei einem großen Entladestrom beide Energiespeicher (11; 12) synchron entladen werden, wofür durch eine Strombegrenzung ein Spannungsgefälle zwischen dem ersten und dem zweiten Energiespeicher (11 bzw. 12) aufrechterhalten wird und dass die Schaltung (60) die Nachladung des ersten Energiespeichers (11) aus dem zweiten Energiespeicher (12) und das bevorzugte Laden oder Entladen eines der Energiespeicher (11 oder 12) oder beider Energiespeicher (11; 12) steuert.

6. Speichersystem nach einem der vorhergehenden Ansprüche, **dadurch gekennzeichnet, dass** die Schaltung (60) zur Aufrechterhaltung des Spannungsgefälles zwischen dem ersten Energiespeicher (11) und dem zweiten Energiespeicher (12) als separate Schaltung 60) zwischen dem ersten und zweiten Energiespeicher (11 bzw. 12) ausgebildet oder in einen Laderegler (78) integriert ist.

7. Speichersystem gemäß einem der vorhergehenden Patentansprüche, **dadurch gekennzeichnet, dass** der erste Energiespeicher (11) aus einem Energieverteilungsnetz (17) oder aus wenigstens einem Generator geladen wird, während die Kapazität des zweiten Energiespeichers (12) als Pufferspeicher für unregelmäßig verfügbare Energiequellen (16), wie regenerative Energiequellen, vorgehalten wird.

8. Speichersystem gemäß einem der vorhergehenden Patentansprüche, **dadurch gekennzeichnet, dass** der zweite Energiespeicher (12) bei einem Betrieb außerhalb seines zulässigen Betriebstemperaturbereiches vom ersten Energiespeicher (11) abgekoppelt oder dessen Ladestrom begrenzt wird und anstehende überschüssige Energie und/oder im Speichersystem entstehende Abwärme insbesondere einer Balancerschaltung zur Aufheizung, Lüftung oder Kühlung des zweiten Energiespeichers (12) nutzbar ist, um diesen wieder in seinen zulässigen Betriebsbereich zu überführen.

9. Speichersystem nach Anspruch 8, **dadurch gekennzeichnet, dass** als Widerstand in der Balancerschaltung wenigstens ein Peltierelement verwendet wird, das durch entsprechende Ansteuerung wahlweise zum Heizen oder Kühlen der Energiespeicher dient.

10. Speichersystem gemäß einem der vorhergehenden Patentansprüche, **dadurch gekennzeichnet, dass** beide Energiespeicher (11; 12) mit Einrichtungen (104) zur Messung ihrer Spannungen (V11; V12) und/oder ihrer Ströme (I11; I12) versehen sind und die von den Einrichtungen (104) gemessenen Werte als Steuersignale einem Mikrocontroller (13), der Stromsteuerung oder Stromregelung 60) und/oder dem Trennschalter (24; 34; 36) und/oder einer Balancerschaltung zuführbar sind und/oder diese Werte für die Steuerung von Lastausgängen oder die Weiterleitung von Überschüssen in andere Energiespeicher, wie thermische Energiespeicher verwendbar sind.

11. Speichersystem gemäß einem der vorhergehenden Patentansprüche, **dadurch gekennzeichnet, dass** Betriebsdaten des ersten und zweiten Energiespeichers (11; 12), wie die Spannung, der Ladezustand oder der Zeitpunkt der letzten Vollladung überwacht, gespeichert oder über eine Schnittstelle (13A) an andere Geräte ausgeben werden.

## Claims

1. Storage system (10) for storing electrical energy, comprising at least one first energy store (11) and at least one second energy store (12) which have a different cycle stability and/or charging and discharging characteristics and are connected by means of a parallel circuit to at least one electrical consumer (18; 19) for discharging and to at least one energy source (16) for charging, the second energy store (12) having a higher nominal voltage, in the range of the charging voltage of the first energy store (11), than the first energy store (11), as a result of which the second energy store is discharged with priority during discharge, a voltage gradient between the first energy store (11) and the second energy store (12) being additionally maintained by means of a circuit (60) having a plurality of semiconductors (61; 62) for the priority charging of the first energy store or to protect or control the second energy store (12), **characterized in that** the semiconductors (61; 62) are designed as anti-serially connected transistors (61; 62) which are operated in a switching, analog or clocked manner.

2. Storage system, in particular according to claim 1, **characterized in that** a plurality of storage systems (10) are connected in series (12) to form an overall system (100), each of these storage systems (10) or a higher-level controller detecting and processing the voltages (U₁₀) in the relevant storage system (10) and the voltage (U₁₀₀) of the overall system (100) and controlling the operating parameters of the first energy stores (11), which are connected in series, in a closed-loop manner by connecting the second energy stores (12) individually.

3. Storage system according to claim 2, **characterized in that,** in the case of different states of charge of the storage systems (10), compensating currents between the energy stores (11; 12) of a storage system (10) and the overall system (100), taking into account the individual voltages (U₁₀) and the total voltage (U₁₀₀), are made possible by a DC/DC converter (102), or compensating currents between the storage systems (10) are made possible by a galvanically separated DC/DC converter.

4. Storage system according to any of the preceding claims, **characterized in that** the first energy store (11) is formed by one or more lead-acid batteries (11) and the second energy store (12) is formed by one or more lithium batteries, lithium iron phosphate batteries, lithium-sulfur batteries, lithium-titanate batteries or lithium-air batteries.

5. Storage system according to any of the preceding claims, **characterized in that** the circuit (60) makes the preferred charging of the first energy store (11) possible and controls the discharge of the first and the second energy stores (11; 12) such that, in the case of a small discharge current, the second energy store (12) is discharged with priority, and, in the case of a large discharge current, the two energy stores (11; 12) are discharged synchronously, for which purpose a voltage gradient between the first and second energy stores (11 and 12) is maintained by a current limiter, and **in that** the circuit (60) controls the recharging of the first energy store (11) from the second energy store (12) and the preferred charging or discharging of one of the energy stores (11 and 12) or both energy stores (11; 12).

6. Storage system according to any of the preceding claims, **characterized in that** the circuit (60) for maintaining the voltage gradient between the first energy store (11) and the second energy store (12) is designed as a separate circuit (60) between the first and second energy stores (11 or 12) or is integrated into a charge controller (78).

7. Storage system according to any of the preceding claims, **characterized in that** the first energy store (11) is charged from an energy distribution network (17) or from at least one generator, while the capacitance of the second energy store (12) is kept available as a buffer store for irregularly available energy sources (16), such as regenerative energy sources.

8. Storage system according to any of the preceding claims, **characterized in that** the second energy store (12) is decoupled from the first energy store (11) or the charging current thereof is limited during operation of said second energy store outside the permissible operating temperature range thereof, and present excess energy and/or waste heat generated in the storage system, in particular of a balancer circuit, can be used for heating, ventilating or cooling the second energy store (12) in order to bring it back into the permissible operating range thereof.

9. Storage system according to claim 8, **characterized in that** at least one Peltier element is used as a resistor in the balancer circuit, which Peltier element, by means of corresponding control, is optionally used for heating or cooling the energy stores.

10. Storage system according to any of the preceding claims, **characterized in that** the two energy stores (11; 12) are provided with devices (104) for measuring the voltages (V11; V12) and/or the currents (111; 112) thereof, and the values measured by the devices (104) can be supplied as control signals to a micro-controller (13), the open-loop current controller or closed-loop current controller (60) and/or the isolating switch (24; 34; 36) and/or a balancer circuit, and/or these values can be used for controlling load outputs or for forwarding excesses to other energy stores, such as thermal energy stores.

11. Storage system according to any of the preceding claims, **characterized in that** operating data of the first and second energy stores (11; 12), such as the voltage, the state of charge or the time of the last full charge, are monitored, stored or output to other devices via an interface (13A).

## Revendications

1. Système accumulateur (10) destiné à accumuler de l'énergie électrique, comportant au moins un premier accumulateur d'énergie (11) et au moins un second accumulateur d'énergie (12), lesquels présentent une résistance de cycle et/ou des caractéristiques de charge et de décharge différentes et sont reliés par un circuit parallèle à au moins un consommateur électrique (18 ; 19) pour la décharge et à au moins une source d'énergie (16) pour la charge, le second accumulateur d'énergie (12) présentant une tension nominale plus élevée que le premier accumulateur d'énergie (11), dans la plage de la tension de charge du premier accumulateur d'énergie (11), de sorte qu'il est déchargé en priorité lors de la décharge, et une chute de tension entre le premier accumulateur d'énergie (11) et le second accumulateur d'énergie (12) étant en outre maintenue au moyen d'un circuit (60) comportant plusieurs semi-conducteurs (61 ; 62) pour la charge prioritaire du premier accumulateur d'énergie ou pour la protection ou le réglage du second accumulateur d'énergie (12), **caractérisé en ce que** les semi-conducteurs (61 ; 62) sont conçus comme des transistors (61 ; 62) commutés en série inversée, qui fonctionnent de manière commutée, analogique ou cadencée.

2. Système accumulateur, en particulier selon la revendication 1, **caractérisé en ce que** plusieurs systèmes accumulateurs (10) sont commutés en série (12) pour former un système global (100), chaque système accumulateur (10) ou une commande de niveau supérieur enregistrant et traitant les tensions (U₁₀) dans le système accumulateur (10) respectif et la tension (U₁₀₀) du système global (100), et réglant les paramètres de fonctionnement du premier accumulateur d'énergie (11) commuté en série par commutation individuelle du second accumulateur d'énergie (12).

3. Système accumulateur selon la revendication 2, **caractérisé en ce que,** lors de différents états de charge des systèmes accumulateurs (10), des courants de compensation entre les accumulateurs d'énergie (11 ; 12) d'un système accumulateur (10) et le système global (100) sont rendus possibles au moyen d'un convertisseur DC/DC (102), en prenant en compte les tensions individuelles (U₁₀) et la tension globale (U₁₀₀) ou des courants de compensation entre les systèmes accumulateurs (10) sont rendus possibles au moyen d'un convertisseur DC/DC séparé par isolement galvanique.

4. Système accumulateur selon l'une des revendications précédentes, **caractérisé en ce que** le premier accumulateur d'énergie (11) est formé par une ou plusieurs batteries au plomb (11) et que le second accumulateur d'énergie (12) est formé par une ou plusieurs batteries au lithium, batteries au lithium-fer-phosphate, batteries au lithium-soufre, batteries au lithium-titanate ou batteries au lithium-air.

5. Système accumulateur selon l'une des revendications précédentes, **caractérisé en ce que** le circuit (60) permet d'obtenir le chargement favorisé du premier accumulateur d'énergie (11) et commande la décharge du premier et du second accumulateur d'énergie (11 ; 12) de telle sorte que lors d'un faible courant de décharge, le second accumulateur d'énergie (12) est déchargé en priorité et que lors d'un courant de décharge important, les deux accumulateurs d'énergie (11 ; 12) sont déchargés de manière synchrone, ce pourquoi une chute de tension entre le premier et le second accumulateur d'énergie (11 ou 12) est maintenue par une limitation de courant et **en ce que** le circuit (60) commande la recharge du premier accumulateur d'énergie (11) à partir du second accumulateur d'énergie (12) et la charge ou décharge favorisée de l'un des accumulateurs d'énergie (11 ou 12) ou des deux accumulateurs d'énergie (11 ; 12).

6. Système accumulateur selon l'une des revendications précédentes, **caractérisé en ce que** le circuit (60) est conçu en tant que circuit séparé (60) entre le premier et le second accumulateur d'énergie (11 ou 12) pour maintenir la chute de tension entre le premier accumulateur d'énergie (11) et le second accumulateur d'énergie (12) ou est intégré dans un régulateur de charge (78).

7. Système accumulateur selon l'une des revendications précédentes, **caractérisé en ce que** le premier accumulateur d'énergie (11) est chargé à partir d'un réseau de distribution d'énergie (17) ou à partir d'au moins un générateur, tandis que la capacité du second accumulateur d'énergie (12) est maintenue pour servir d'accumulateur tampon pour des sources d'énergie (16) intermittentes, telles que des sources d'énergie renouvelables.

8. Système accumulateur selon l'une des revendications précédentes, **caractérisé en ce que** le second accumulateur d'énergie (12) est découplé du premier accumulateur d'énergie (11) ou que son courant de charge est limité lors de son fonctionnement en dehors de sa plage de température de fonctionnement admissible et que l'énergie excédentaire à venir et/ou la chaleur résiduelle générée dans le système accumulateur, en particulier celle d'un circuit d'équilibrage, peut être utilisée pour chauffer, ventiler ou refroidir le second accumulateur d'énergie (12) afin de le faire revenir dans sa plage de fonctionnement admissible.

9. Système accumulateur selon la revendication 8, **caractérisé en ce qu'au** moins un élément Peltier est utilisé comme résistance dans le circuit d'équilibrage, lequel élément Peltier est utilisé de manière sélective au moyen d'une commande appropriée, pour chauffer ou refroidir l'accumulateur d'énergie.

10. Système accumulateur selon l'une des revendications précédentes, **caractérisé en ce que** les deux accumulateurs d'énergie (11 ; 12) sont pourvus de dispositifs (104) permettant de mesurer leurs tensions (V11 ; V12) et/ou leurs courants (I11 ; I12) et que les valeurs mesurées par les dispositifs (104) peuvent être fournies comme signaux de commande à un microcontrôleur (13), à la commande de courant ou au régulateur de courant (60) et/ou au commutateur de séparation (24 ; 34 ; 36) et/ou à un circuit d'équilibrage et/ou que ces valeurs peuvent être utilisées pour commander les sorties de charge ou pour transférer des excès dans un autre accumulateur d'énergie, tel qu'un accumulateur d'énergie thermique.

11. Système accumulateur selon l'une des revendications précédentes, **caractérisé en ce que** les données de fonctionnement du premier et du second accumulateur d'énergie (11 ; 12), notamment la tension, l'état de charge ou l'heure de la dernière charge complète, sont surveillées, stockées ou délivrées en sortie vers d'autres appareils par l'intermédiaire d'une interface (13A).
